# EUROPEAN PATENT APPLICATION

(11) **EP 4 135 071 A1**
(43) Date of publication of application: **15.02.2023**
(21) Application number: 21939584.5
(22) Date of filing: 11.06.2021
(51) Int. Cl.: H01M 4/36, H01M 4/62, H01M 4/525, H01M 10/052, C01G 53/00

(54) **CATHODE ACTIVE MATERIAL FOR LITHIUM SECONDARY BATTERY, PREPARATION METHOD THEREFOR, AND LITHIUM SECONDARY BATTERY COMPRISING SAME**

(71) Applicant: Samsung SDI Co., Ltd., Yongin-si, Gyeonggi-do 17084 (KR)
(72) Inventor: The designation of the inventor has not yet been filed
(74) Representative: Marks & Clerk LLP
(86) International application number: PCT/KR2021/007311
(87) International publication number: WO 2022/260198

(57) **Abstract**

Provided are a positive active material for a rechargeable lithium battery including a single particle including a lithium nickel-based composite oxide, and a coating portion disposed on a surface of the single particle and containing S and Si, a preparing method thereof, and a rechargeable lithium battery including the same.

## Description

### [Technical Field]

A positive active material for a rechargeable lithium battery, a preparing method thereof and a rechargeable lithium battery including the same are disclosed.

### [Background Art]

A portable information device such as a cell phone, a laptop, smart phone, and the like or an electric vehicle has used a rechargeable lithium battery having high energy density and easy portability as a driving power source. Recently, research has been actively conducted to use a rechargeable lithium battery with high energy density as a driving power source or power storage power source for hybrid or electric vehicles.

Various positive active materials have been investigated to realize rechargeable lithium batteries for applications to the uses. Among them, lithium nickel-based oxide, lithium nickel manganese cobalt composite oxide, lithium nickel cobalt aluminum composite oxide, lithium cobalt oxide, and the like are mainly used as a positive active material. However, these positive active materials have structure collapses or cracks during the repeated charges and discharges and thus problems of deteriorating a long-term cycle-life of a rechargeable lithium battery and increasing resistance and thus exhibiting no satisfactory capacity characteristics. Accordingly, development of a novel positive active material securing long-term cycle-life characteristics as well as realizing high capacity and high energy density is required.

### [Disclosure]

### [Technical Problem]

Provided are a positive active material for a rechargeable lithium battery that is structurally stable and suppresses side reactions with an electrolyte to realize low interfacial resistance and high capacity while improving room-temperature and high-temperature cycle-life characteristics, a preparing method thereof and a rechargeable lithium battery including the same.

### [Technical Solution]

In an embodiment, provided is a positive active material for a rechargeable lithium battery including a single particle (a single crystal) including a lithium nickel-based composite oxide, and a coating portion disposed on a surface of the single particle and containing S and Si.

In another embodiment, a method of preparing a positive active material for a rechargeable lithium battery includes: (i) mixing a precursor including a nickel-based transition metal hydroxide, a nickel-based transition metal oxide, or a combination thereof; a lithium raw material; a flux agent including an alkali metal sulfate; and silica and performing first heat treatment, and (ii) obtaining a positive active material including a single particle including a lithium nickel-based composite oxide and a coating portion disposed on a surface of the single particle and containing S and Si.

In another embodiment, a rechargeable lithium battery including a positive electrode including the positive active material, a negative electrode, and an electrolyte is provided.

### [Advantageous Effects]

The positive active material for a rechargeable lithium battery prepared according to an embodiment is structurally stable and has low interfacial resistance due to suppression of side reactions with an electrolyte, and a rechargeable lithium battery including the same may exhibit excellent room-temperature and high-temperature cycle-life characteristics while realizing high capacity and high energy density characteristics.

### [Description of the Drawings]

FIG. 1 is a schematic view illustrating a rechargeable lithium battery according to an embodiment.
FIG. 2 is a scanning electron microscope photograph of the positive active material prepared in Example 1.
FIG. 3 is a scanning transmission electron microscope-energy dispersive X-ray spectroscopy (STEM-EDS) photograph of the positive active material prepared in Example 1.
FIG. 4 is a scanning transmission electron microscope-energy dispersive X-ray spectroscopic (STEM-EDS) photograph of the positive active material prepared in Example 2.
FIG. 5 is a Nyquist plot measured during initial charging for the battery cells manufactured in Example 1 and Comparative Example 1.
FIG. 6 is a Nyquist plot measured after 25 cycles for the battery cells manufactured in Example 1 and Comparative Example 1.
FIG. 7 is a Nyquist plot measured after 25 cycles for the battery cells manufactured in Example 2 and Comparative Example 1.
FIG. 8 is a Nyquist plot measured after 25 cycles for the battery cells manufactured in Examples 1 and 3 and Comparative Example 1.
FIG. 9 is a graph of lithium ion diffusivity during initial charging of battery cells manufactured in Comparative Examples 1 and 2.
FIG. 10 is a graph of lithium ion diffusivity during initial discharging of battery cells manufactured in Comparative Examples 1 and 2.
FIG. 11 is a graph of lithium ion diffusivity during initial charging of battery cells manufactured in Comparative Example 1 and Examples 1 and 2.
FIG. 12 is a graph of lithium ion diffusivity during initial discharging of battery cells manufactured in Comparative Example 1 and Examples 1 and 2.
FIG. 13 is a DC-IR graph before and after 50 cycles at 25 °C for the battery cells of Example 1, Comparative Example 1, and Comparative Example 2.
FIG. 14 is a DC-IR graph before and after 50 cycles at 45 °C for the battery cells of Example 1, Comparative Example 1, and Comparative Example 2.
FIG. 15 is a graph showing the cycle-life characteristics of the battery cells manufactured in Examples 1, 6, and 7.
FIG. 16 is an X-ray photoelectron spectroscopic analysis graph on the surface of the positive active material of Examples 1 and 2 and Comparative Examples 1 and 2.
FIG. 17 is an X-ray photoelectron spectroscopic analysis graph showing a profile according to a depth of the positive active material of Example 1.
FIG. 18 is an X-ray photoelectron spectroscopic analysis graph showing a profile according to the depth of the positive active material of Example 2.
FIG. 19 is a graph showing lithium ion diffusivity during initial charging of Comparative Example 1 and Examples 2 and 5.
FIG. 20 is a graph showing the initial discharge capacity of Comparative Example 1, Comparative Example 2, Example 1, Example 4, and Example 5.
FIG. 21 is a scanning electron microscope photograph of the positive active material prepared in Comparative Example 1.
FIG. 22 is a scanning electron microscope photograph of the positive active material prepared in Comparative Example 2.
FIG. 23 is a graph showing the self-discharge behavior of the battery cells of Example 2, Comparative Example 1, and Comparative Example 3.

### [Mode for Invention]

Hereinafter, specific embodiments will be described in detail so that those of ordinary skill in the art can easily implement them. However, this disclosure may be embodied in many different forms and is not construed as limited to the example embodiments set forth herein.

The terminology used herein is used to describe embodiments only, and is not intended to limit the present disclosure. The singular expression includes the plural expression unless the context clearly dictates otherwise.

As used herein, "a combination thereof' refers to a mixture, a laminate, a composite, a copolymer, an alloy, a blend, a reaction product, and the like of constituents.

Herein, it should be understood that terms such as "comprises," "includes," or "have" are intended to designate the presence of an embodied feature, number, step, element, or a combination thereof, but it does not preclude the possibility of the presence or addition of one or more other features, number, step, element, or a combination thereof.

In the drawings, the thickness of layers, films, panels, regions, etc., are exaggerated for clarity and like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

In addition, "coating portion", "protective layer", "protective layer" and the like herein includes not only a shape formed on the whole surface when viewed from a plan view, but also a shape formed on a partial surface.

In addition, the average particle diameter may be measured by a method well known to those skilled in the art, for example, may be measured by a particle size analyzer, or may be measured by a transmission electron micrograph or a scanning electron micrograph. Alternatively, it is possible to obtain an average particle diameter value by measuring using a dynamic light scattering method, performing data analysis, counting the number of particles for each particle size range, and calculating from this. Unless otherwise defined, the average particle diameter may mean the diameter (D50) of particles having a cumulative volume of 50 volume% in the particle size distribution.

### Method of Preparing Positive Active Material

In an embodiment, a method of preparing a positive active material for a rechargeable lithium battery includes (i) mixing a precursor including a nickel-based transition metal hydroxide, a nickel-based transition metal oxide, or a combination thereof; a lithium raw material; a flux agent including an alkali metal sulfate; and silica and performing first heat treatment, and (ii) obtaining a positive active material including a single particle including a lithium nickel-based composite oxide and a coating portion disposed on a surface of the single particle and containing S and Si.

In general, since a high nickel-based positive active material has a capacity-increasing effect due to the high nickel concentration, attempts to apply this material to an electric vehicle field and the like, which require high energy density, are being made. This high nickel-based positive active material in general has a poly-crystal structure but has a drawback of structural degradation due to the stress between polycrystalline interfaces, as charging and discharging continue, and thereby, deterioration of cycle-life characteristics. On the other hand, a single-particle high nickel-based positive active material may solve the drawback due to this structural bonding and thus is being actively developed in the industry.

An embodiment provides a positive active material exhibiting improved cycle-life characteristics as well as realizing high-capacity by forming a silicon-based protective layer on the single particle surface as well as applying a sulfate-based flux agent in preparing the single-particle high nickel-based positive active material to suppress a side reaction between the active material with structural stability and high lithium diffusivity and an electrolyte.

In the method of preparing the positive active material, the precursor may be a nickel-based transition metal hydroxide, or may be a material obtained by oxidative heat treatment of a nickel-based transition metal hydroxide. For example, the precursor may be obtained by oxidative heat treatment of a nickel-based transition metal hydroxide at a temperature of 400 °C to 600 °C for 0.1 hours to 3 hours. Accordingly, the precursor may mean a nickel-based transition metal hydroxide, a nickel-based transition metal oxide, or a mixture thereof.

An average particle diameter (D50) of the precursor may be 1 µm to 20 µm, for example, 1 µm to 15 µm, 1 µm to 10 µm, or 1 µm to 6 µm. In addition, the precursor may be a single particle.

In the precursor, nickel may be included in an amount of greater than or equal to 60 mol%, for example, greater than or equal to 70 mol%, greater than or equal to 80 mol%, or greater than or equal to 90 mol% based on the total content of the transition metal. The higher the nickel content, the higher the capacity of the positive active material prepared through the same. For example, the nickel-based transition metal oxide may be represented by Chemical Formula 21.

[Chemical Formula 21] Niₓ₂₁M²¹_{y21}M²²_{1-x21-y21}O₂

In Chemical Formula 21, 0.6≤x21≤1, 0≤y21≤0.4, and M²¹ and M²² are each independently Al, B, Ce, Co, Cr, F, Mg, Mn, Mo, Nb, P, S, Si, Sr, Ti, V, W, Zr, or a combination thereof.

In Chemical Formula 21, 0.7≤x21≤1, 0≤y21≤0.3, 0.8≤x21≤1, 0≤y21≤0.2, or 0.9≤x21≤1, 0≤y21≤0.1.

The nickel-based transition metal hydroxide may be, for example, represented by Chemical Formula 31.

[Chemical Formula 31] Niₓ₃₁M³¹_{y31}M³²_{1-x31-y31}(OH)₂

In Chemical Formula 31, 0.6≤x31≤1, 0≤y31≤0.4, and M³¹ and M³² are each independently Al, B, Ce, Co, Cr, F, Mg, Mn, Mo, Nb, P, S, Si, Sr, Ti, V, W, Zr, or a combination thereof.

Similarly, in Chemical Formula 31, x31 and y31 may be, for example, 0.7≤x31≤1, 0≤y31≤0.3, 0.8≤x31≤1, 0≤y31≤0.2, or 0.9≤x31≤1, 0≤y31≤0.1.

In the preparing method, the lithium raw material may be, for example, Li₂CO₃, LiOH, a hydrate thereof, or a combination thereof. When the total content of the transition metal including nickel is 100 parts by mole, the lithium raw material may be mixed in an amount of 100 parts by mole to 130 parts by mole, for example, 110 parts by mole to 120 parts by mole. In this case, it is possible to obtain an active material having a stable structure and realizing a high capacity.

In the preparing method, the flux agent is known as a material involved in the growth of single particles, and in an embodiment, a sulfate-based flux agent is used, and specifically, alkali metal sulfate is used. The alkali metal sulfate may be represented by A₂SO₄ (A is an alkali metal), and may be, for example, lithium sulfate, sodium sulfate, or a combination thereof. The alkali metals herein include lithium, sodium, potassium, rubidium, cesium, and francium. That is, the method of preparing the positive active material according to the embodiment may be a method of synthesizing a single particle using a flux agent. When the total content of the transition metal containing nickel is 100 parts by mole, the flux agent containing alkali metal sulfate may be mixed in an amount of 0.1 to 10 parts by mole, for example, 0.5 to 5 parts by mole, 0.5 parts by mole to 3 parts by mole, or 0.5 to 2 parts by mole. In this case, a single particle having an appropriate size is successfully synthesized, and a positive active material that is structurally stable and realizes a high capacity may be obtained.

On the other hand, when only a sulfate-based flux agent is used to synthesize a single particle positive active material, sulfur or sulfur oxides do not remain on the surface of the single particle, and there is no special protective layer on the surface, resulting in structural collapse due to charging and discharging or side reactions between the active material and the electrolyte. On the contrary, when the sulfate-based flux agent and silica are used together according to an embodiment, sulfur and silicon are present together on the surface of the single particle, a stable protective layer is formed on the surface of the single particle, and a larger and harder single particle may be obtained.

In the preparing method, the silica may be mixed in an amount of 0.05 to 5 parts by mole when the total content of the transition metal including nickel is 100 parts by mole, for example, 0.05 to 3 parts by mole, or 0.1 to 2 parts by mole. In this case, the silicon-based material may be stably coated on the surface of the single particle, and the lithium ion conductivity may be improved, the single particle structure may be stabilized, and an effect of increasing capacity by silicon may also be obtained.

The silica may include hydrophobic silica (hydrophobic SiO₂), hydrophilic silica (hydrophilic SiO₂), or a combination thereof. The hydrophobic silica may be one in which an aliphatic hydrocarbon is bonded to the surface of the silica particle, and the hydrophilic silica may be one in which a hydroxyl group is bonded to the surface of the silica particle. The aliphatic hydrocarbon may be, for example, an aliphatic hydrocarbon having 1 to 10 carbon atoms, an aliphatic hydrocarbon having 1 to 6 carbon atoms, or the like, and may be a chain-type aliphatic hydrocarbon. Both hydrophobic silica and hydrophilic silica may form a stable silicon-based protective layer on the surface of a single particle. However, it has been confirmed that when hydrophobic silica is used, it is more advantageous in terms of battery capacity characteristics and battery cycle-life characteristics (see Evaluation Example 6 below).

Meanwhile, in the preparing method, the first heat treatment may be performed by further mixing an alkali metal phosphate. The alkali metal phosphate may be represented by A₃PO₄ (A is an alkali metal), and may be, for example, lithium phosphate, sodium phosphate, or a combination thereof. When a sulfate-based flux agent, silica, and alkali metal phosphate are mixed together to prepare a single particle active material, a P component is present on the surface of the single particle, and this active material further improves lithium ion conductivity, lowers interfacial resistance, and further improves capacity characteristics and cycle-life characteristics.

The first heat treatment may be performed at 750 °C to 900 °C, for example, at 750 °C to 850 °C, and may be performed for 10 hours to 20 hours.

The preparing method may further include washing the obtained product and performing a second heat treatment after the first heat treatment. The washing may include mixing and drying the obtained product in distilled water, and residual lithium may be removed by this process. The second heat treatment may be performed, for example, at 600 °C to 780 °C or at 650 °C to 750 °C, and may be performed for 10 hours to 20 hours. By performing the second heat treatment, it is possible to obtain a positive active material having a stable structure, high lithium ion conductivity, low interfacial resistance, and high capacity and long cycle-life.

The preparing method may further include, after the first heat treatment, adding a cobalt compound to perform a cobalt coating while washing the obtained product, and performing a second heat treatment. The cobalt coating may be coating of cobalt corresponding to 1 part by mole to 10 parts by mole, or 1 part by mole to 5 parts by mole of 100 parts by mole of the transition metal including nickel. The cobalt compound may be, for example, a cobalt sulfate. Similarly, the second heat treatment may be performed at 600 °C to 780 °C or 650 °C to 750 °C, and may be performed for 10 hours to 20 hours. When the single particle surface is coated with cobalt as described above, the single-particle positive active material may have a more stable structure and realize higher cycle-life characteristics.

In addition, the preparing method may further include, after the first heat treatment, mixing a zirconium compound with the obtained product to perform a zirconium coating, and performing a second heat treatment. The zirconium coating may be a coating of zirconium corresponding to 0.001 to 0.5 parts by mole, or 0.005 to 0.3 parts by mole, or 0.01 to 0.1 parts by mole based on 100 parts by mole of the transition metal including nickel. The zirconium compound may be, for example, zirconium oxide, and may be mixed in a dry manner. Similarly, the second heat treatment may be performed at 600 °C to 780 °C or 650 °C to 750 °C, and may be performed for 10 hours to 20 hours.

On the other hand, the preparing method further includes, after the first heat treatment, adding a cobalt compound while washing the obtained product to perform cobalt coating, and drying the obtained product, mixing the resultant with the zirconium compound to perform zirconium coating, and performing a second heat treatment. In this case, the coating portion of the surface of the single particle may further include Co and Zr while including S and Si, and optionally P. In this case, the positive active material may exhibit excellent capacity characteristics and cycle-life characteristics.

### Positive Active Material

In an embodiment, a positive active material for a rechargeable lithium battery as a positive active material prepared by the aforementioned method, includes a single particle including a lithium nickel-based composite oxide, and a coating portion disposed on the surface of the single particle and containing S and Si.

First, the positive active material for the rechargeable lithium battery has low interfacial resistance (R_{ct}, charge-transfer resistance), thus facilitating insertion/desorption of lithium during charging and discharging, and maintaining a constant charging/discharging efficiency to improve cycle-life characteristics of the battery greatly. Second, the single particle positive active material exhibits improved lithium diffusivity. That is, the lithium ion conductivity is greatly improved. Third, a stable protective layer is formed on the surface of the positive active material to effectively suppress side reactions between the active material and the electrolyte, and the battery including the positive active material may exhibit excellent output characteristics and high-temperature cycle-life characteristics because resistance at the interface between the positive electrode and the electrolyte is lowered.

In the positive active material, the single particle exists alone without having a grain boundary in the particles and means that it consists of one particle. Alternatively, it may mean a monolithic structure or a single body structure in which the particles exist as an independent phase without aggregation of the particles with each other as a morphology, and may be expressed as a single particle particle.

In the positive active material, the coating portion may be expressed as a type of protective layer or protective layer, and may also be expressed as a lithium ion conductive layer (Li⁺ conductive layer). The coating portion may be formed on the whole surface of the single particle or formed partially. A thickness of the coating portion may be approximately 1 nm to 50 nm, for example, 1 nm to 40 nm, 1 nm to 30 nm, 1 nm to 20 nm, 1 nm to 10 nm, or 1 nm to 5 nm. In the case of having such a thickness range, the coating portion may improve lithium ion conduction, suppress side reactions between the active material and the electrolyte, and improve capacity while improving cycle-life characteristics.

The coating portion includes sulfur element (S) and elemental silicon (Si) at the same time. The sulfur element may be derived from the sulfate-based flux agent in the aforementioned preparing method, and it may be considered that the sulfate-based flux agent is chemisorbed on the surface of the single particle. The sulfur element may exist in a form of sulfur oxide, lithium-sulfur, lithium-sulfur oxide, or lithium-silicon-sulfur oxide, or in a form in which an aliphatic hydrocarbon group is bonded to them.

The silicon element may be derived from the silica of the aforementioned preparing method, and on the single particle surface, it may exist in a silicon oxide form, a lithium-silicon form, a lithium-silicon oxide form, a lithium-silicon-sulfur oxide form, or in a form in which an aliphatic hydrocarbon group is bonded to them.

On the surface of the single particle, that is, in the coating portion, a sulfur-containing compound such as sulfur element or sulfur oxide and a silicon-containing compound such as silicon oxide may form a chemical bond such as a covalent bond or an ionic bond with each other. It is understood that this chemical bonding occurs because the precursor, lithium raw material, sulfate-based flux agent, and silica are mixed in the synthesis process and then the first heat treatment is performed at a high temperature and the second heat treatment is optionally performed. In addition, in the coating portion, the sulfur-containing compound and the silicon-containing compound may have a intermolecular interaction, such as van der Waals force or electrostatic interaction. That is, it is understood that the sulfur-containing compound and the silicon-containing compound are not separated from each other on the surface of the single particle, but form a chemical bond or have an intermolecular interaction, or both exist.

Compared to the case where only the sulfur-containing compound or only the silicon-containing compound exists on the surface of the single particle, or they are separated without any interaction, according to an embodiment, when they exist in a form having mutual attraction, significant effects have been observed in terms of interfacial resistance, lithium ion conductivity, DC resistance, initial capacity, room-temperature cycle-life, and high-temperature cycle-life, and it has been also confirmed that the single particle itself grew larger and harder.

Specifically, the coating portion may include a sulfur-containing compound represented by Chemical Formula 1 and a silicon-containing compound represented by Chemical Formula 2.

[Chemical Formula 1] Aₐ₁SO_{z1}

In Chemical Formula 1, A is an alkali metal, 0≤a1≤2, and 0≤z1≤4.

[Chemical Formula 2] Aₐ₂Siₓ₂O_{z2}

In Chemical Formula 2, A is an alkali metal, 0≤a2≤5, 1≤x2≤2, and 0≤z2≤4.

During the synthesis process, the precursor, lithium raw material, sulfate-based flux agent, and silica are mixed and subjected to first heat treatment and optionally second heat treatment to distribute the sulfur-containing compound on the surface of a single particle including lithium nickel-based transition metal oxide, wherein the sulfur-containing compound may have various compositions. For example, the sulfur-containing compound represented by Chemical Formula 1 may include alkali metal sulfur oxides including alkali metal sulfates (e.g., Li₂SO₄, Na₂SO₄), or a modification thereof; an alkali metal sulfide such as lithium sulfide (Li₂S); or a combination thereof. It is understood that sulfur containing compounds of various compositions exist, alone or in combination.

Herein, the alkali metal A may be lithium, sodium, potassium, rubidium, cesium, francium, or a combination thereof, for example lithium or sodium.

In Chemical Formula 1, 0≤a1≤2, 0<a1≤2, 0.5≤a1≤2, 1≤a1≤2, or 1.5≤a1≤2, and 0≤z1≤4, 0<z1≤4, 1≤z1≤4, 2≤z1≤4, or 3≤z1≤4. The sulfur-containing compounds having various oxidation numbers may coexist in the coating portion.

The silicon-containing compound represented by Chemical Formula 2 may include, for example, silicon oxide including silica (SiO₂) or a modification thereof; an alkali metal silicon oxide including an alkali metal silicate (e.g., Li₂SiO₃, Li₄SiO₄), or a modification thereof; an alkali metal silicide (e.g., LiₓSi, 1≤x≤5); and the like, and these may be present alone or in combination in the coating portion.

In Chemical Formula 2, 0≤a2≤5, 0<a2≤5, 1≤a2≤5, 2≤a2≤5, 3≤a2≤5, 3≤a2≤4, 0≤a2≤2, 0<a2≤5, or 1≤a2≤2, 0≤z2≤4, 0<z2≤4, 1≤z2≤4, or 2≤z2≤4. The silicon-containing compound having various oxidation numbers may coexist in the coating portion.

It is understood that the sulfur-containing compound represented by Chemical Formula 1 and the silicon-containing compound represented by Chemical Formula 2 do not exist separately, but have intermolecular interaction such as van der Waals force and electrostatic interaction.

In addition, the sulfur-containing compound and the silicon-containing compound may form a chemical bond. Specifically, the coating portion may include a sulfur-silicon-containing compound represented by Chemical Formula 3, that is, a compound containing both sulfur and silicon.

[Chemical Formula 3] Aₐ₃Siₓ₃S_{y3}O_{z3}

In Chemical Formula 3, A is an alkali metal, 0≤a3≤5, 0<x3≤2, 0<y3≤5, and 0≤z3≤10.

The sulfur-silicon-containing compound represented by Chemical Formula 3 may include, for example, alkali metal silicon sulfide such as lithium silicon sulfide (e.g., Li₂SiS₃); silicon sulfide (e.g., SiS, SiS₂); silicon sulfate (e.g., Si(SO₄)₂); alkali metal silicon sulfur oxide; or a combination thereof.

In Chemical Formula 3, 0<a3≤5, 1≤a3≤5, 2≤a3≤5, 3≤a3≤5, 0≤a3≤4, 0≤a3≤3, or 0≤a3≤2, 0.1≤x3≤2, 0.5≤x3≤2, or 1≤x3≤2, 0.1≤y3≤5, 0.5≤y3≤5, 1≤y3≤4, 1≤y3≤3, or 1≤y3≤2, 0<z3≤10, 0≤z3≤9, 0≤z3≤8, 1≤z3≤10, or 2≤z3≤10. It is thought that sulfur-silicon-containing compounds of various compositions are formed on the surface of the single particle while undergoing a first heat treatment and optionally a second heat treatment in the synthesis process.

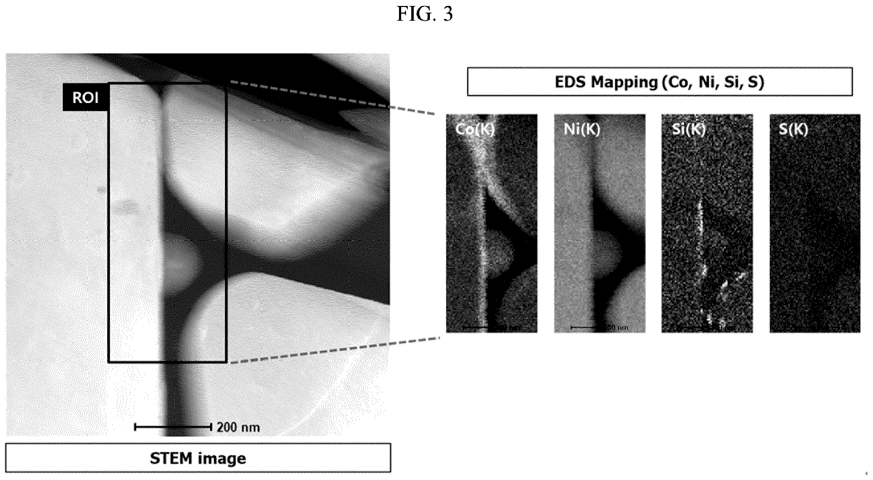

The sulfur-containing compound represented by Chemical Formula 1 and the sulfur-silicon-containing compound represented by Chemical Formula 3 may be distributed on the surface of the single particle. FIG. 3 is an energy dispersive X-ray spectroscopic (EDS) photograph of the positive active material prepared in Example 1 to be described later and referring to FIG. 3, it can be seen that the sulfur element shown in blue is distributed over the whole surface of the single particle.

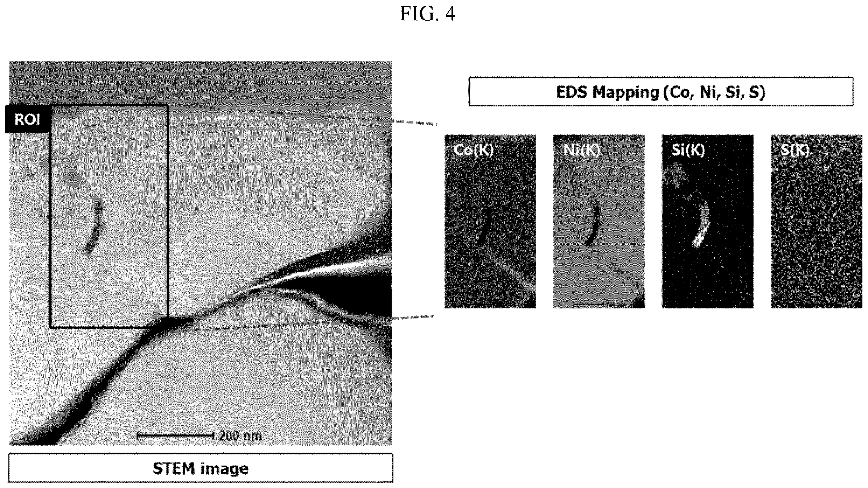

The silicon-containing compound represented by Chemical Formula 2 or 3 may be distributed on the surface of the single particle or present in an island-type coating with a thickness of 1 nm to 50 nm. Referring to FIG. 3, silicon elements marked in pink are distributed on the whole surface of the single particle and simultaneously, coated in the form of an island near to the surface (near-surface). In addition, the silicon-containing compound or the sulfur-silicon-containing compound may also be present in a crack portion inside the single particle. FIG. 4 is an EDS analysis photograph of the positive active material of Example 2 to be described later, and referring to FIG. 4, the silicon elements marked in pink are observed in the crack portion of the single particle. As such, since the silicon-containing compound is coated on the surface and near-surface of the single particle and the crack portion inside the single particle, the positive active material including the same exhibits high lithium ion diffusivity and is effectively suppressed from a side reaction with an electrolyte and may exhibit high-temperature cycle-life characteristics as well as realize high capacity.

Herein, the coating portion may include both the surface and the near-surface.

For example, the sulfur-containing compound may exist within a thickness range of 1 nm to 20 nm or 1 nm to 10 nm on the single particle surface, and the silicon-containing compound may exist within a thickness range of 1 nm to 50 nm or 1 nm to 30 nm on the single particle surface.

In the coating portion, the sulfur elements (S) may be in a content range of 0.01 atom% to 5 atom%, 0.01 atom% to 3 atom%, or 0.01 atom% to 1 atom% based on the total amount of the positive active material, and the silicon elements (Si) may be in a content range of 0.001 atom% to 3 atom%, 0.005 atom% to 2 atom%, or 0.01 atom% to 1 atom% based on the total amount of the positive active material. Herein, the positive active material may not only exhibit excellent lithium ion diffusivity but also be effectively suppressed from a side reaction with an electrolyte, achieving reduced electrode resistance, high initial capacity, and excellent room-temperature/high-temperature cycle-life characteristics.

On the other hand, the coating portion may further include carbon atoms (C). Specifically, the coating portion may further include aliphatic hydrocarbon. The aliphatic hydrocarbon may be, for example, C1 to C10 chain-type aliphatic hydrocarbon or C1 to C6 chain-type aliphatic hydrocarbon. This may be caused by an aliphatic hydrocarbon group bonded onto the surface of silica, when hydrophobic silica is used during the synthesis, or generated, when the positive active material is exposed to air (or oxygen) during the first heat treatment and optionally, a second heat treatment.

Specifically, the coating portion may further include at least one of a sulfur-containing compound represented by Chemical Formula 1-1, a silicon-containing compound represented by Chemical Formula 2-1, and a sulfur-silicon-containing compound represented by Chemical Formula 3-1.

[Chemical Formula 1-1] Aₐ₁SO_{z1}-(CH₂)ₙ₁CH₃

In Chemical Formula 1-1, A is an alkali metal, 0≤a1≤2, 0≤z1≤4, and 0≤n1≤5.

[Chemical Formula 2-1] Aₐ₂Siₓ₂O_{z2}-(CH₂)ₙ₂CH₃

In Chemical Formula 2-1, A is an alkali metal, 0≤a2≤2, 1≤x2≤2, 0≤z2≤4, and 0≤n2≤5.

[Chemical Formula 3-1] Aₐ₃Siₓ₃S_{y3}O_{z3}-(CH₂)ₙ₃CH₃

In Chemical Formula 3-1, A is an alkali metal, 0≤a3≤5, 0<x3≤2, 0<y3≤5, 0≤z3≤10, and 0≤n3≤5.

As an example, the coating portion includes a silicon-containing compound represented by Chemical Formula 2-1, and optionally a sulfur-containing compound represented by Chemical Formula 1-1, and/or a sulfur-silicon-containing compound represented by Chemical Formula 3-1.

In Chemical Formula 1-1, Chemical Formula 2-1, and Chemical Formula 3-1, the alkyl group (-(CH₂)ₙCH₃) may be bonded to any moieties of chemical formulas, and may be connected to the surface of particles composed of chemical formulas. The alkyl group may be, for example, a methyl group, an ethyl group, a propyl group, a butyl group, a pentyl group, a hexyl group, or a combination thereof. As such, when the coating portion may further include an aliphatic hydrocarbon group, the positive active material including the same may exhibit more excellent capacity characteristics and cycle-life characteristics.

In addition, the coating portion may further include elemental phosphorus (P). When an alkali metal phosphate is used together with a sulfate-based flux agent and silica in the synthesis process, a phosphorus-containing compound may be formed on the surface of the single particle. When the coating portion further includes P, the positive active material may have a lower interfacial resistance and exhibit better capacity characteristics and high-temperature cycle-life characteristics.

The coating portion may include, for example, a phosphorus-containing compound represented by Chemical Formula 4.

[Chemical Formula 4] Aₐ₄PO_{z4}

In Chemical Formula 4, A is an alkali metal, 0≤a4≤3, and 0≤z4≤4.

In Chemical Formula 4, 0<a4≤3, 1≤a4≤3, or 2≤a4≤3, 0<z4≤4, 1≤z4≤4, 2≤z4≤4, or 3≤z4≤4.

In the coating portion, the phosphorus-containing compound may be chemically bonded to the sulfur-containing compound and/or the silicon-containing compound, or may have an intermolecular interaction. In addition, the phosphorus-containing compound may further include the aforementioned aliphatic hydrocarbon group.

For example, the coating portion may include a sulfur-silicon-phosphorus containing compound represented by Chemical Formula 5.

[Chemical Formula 5] Aₐ₅Siₓ₅S_{y5}Pₚ₅O_{z5}

In Chemical Formula 5, A is an alkali metal, 0≤a5≤5, 0<x5≤2, 0<y5≤5, 0<p5≤3, and 0≤z5≤10.

In Chemical Formula 5 0<a5≤5, 1≤a5≤5, 2≤a5≤5, 3≤a5≤5, 0≤a5≤4, 0≤a5≤3, or 0≤a5≤2, 0.1≤x5≤2, 0.5≤x5≤2, or 1≤x5≤2, 0.1≤y5≤5, 0.5≤y5≤5, 1≤y5≤4, 1≤y5≤3, or 1≤y5≤2, 0.1≤p5≤3, 0.5≤p5≤3, or 1≤p5≤2, 0<z5≤10, 0≤z5≤9, 0≤z5≤8, 1≤z5≤10, or 2≤z5≤10. It is thought that the sulfur-silicon-phosphorus-containing compound having various compositions are formed on the surface of the single particle while undergoing a first heat treatment and optionally a second heat treatment in the synthesis process.

A content of the element phosphorus (P) may be 0.001 atom% to 3 atom%, or 0.005 atom% to 2 atom%, or 0.01 atom% to 1 atom% based on the total amount of the positive active material. In this case, the positive active material may exhibit very low interfacial resistance, high initial capacity, and improved room-temperature/high-temperature cycle-life characteristics.

Meanwhile, the coating portion may further include at least one selected from Co and Zr. In the synthesis process, after the first heat treatment, a cobalt and/or zirconium coating process may be further performed. In this case, the positive active material may have a more structurally stable shape, and may exhibit superior room-temperature and high-temperature cycle-life characteristics. For example, a thickness of the cobalt coating portion may be 1 nm to 50 nm, or 1 nm to 30 nm, and a thickness of the zirconium coating portion may be 1 nm to 20 nm, or 1 nm to 10 nm.

The coating portion may further include optionally Al, B, Ca, Ce, Cr, Cu, F, Fe, Mg, Nb, Sr, Ti, W, or Y for structural stability of the positive active material or to improve the cycle-life characteristics of the battery, or a combination thereof.

The lithium nickel-based composite oxide may be expressed as a lithium nickel transition metal composite oxide, and may be an oxide including lithium, nickel, and other transition metals. In the lithium nickel-based composite oxide, nickel may be included in 60 mol% or more, 70 mol% or more, 80 mol% or more, or 90 mol% or more, and 100 mol% or less, 99 mol% or less, 98 mol% or less, or 96 mol% or less based on the total content of the transition metal excluding lithium. In the case of a high nickel-based oxide with a high nickel content, high capacity may be realized, but single-particle high-nickel oxide is difficult to synthesize, and it is difficult to grow into particles having an appropriate particle size. On the other hand, the positive active material according to the embodiment may have a single particle form including a high nickel-based oxide, may grow particles to an appropriate size, may have a stable structure, may exhibit a high capacity, and may exhibit excellent room-temperature and high-temperature cycle-life characteristics.

The lithium nickel-based composite oxide may be, for example, represented by Chemical Formula 11.

[Chemical Formula 11] Liₐ₁₁Niₓ₁₁M¹y₁₁M²_{1-x11-y11}O₂

In Chemical Formula 11, 0.9≤a11≤1.8, 0.6≤x11≤1, 0≤y11≤0.4, and M¹ and M² are each independently Al, B, Ce, Co, Cr, F, Mg, Mn, Mo, Nb, P, S, Si, Sr, Ti, V, W, Zr, and combinations thereof.

In Chemical Formula 11, 0.9≤a11≤1.5, or 0.9≤a11≤1.2 or 0.95≤a11≤1.10, 0.7≤x11≤1 and 0≤y11≤0.3, or 0.8≤x11≤1 and 0≤y11≤0.2, or 0.9≤x11≤1 and 0≤y11≤0.1.

The lithium nickel-based composite oxide may be, for example, represented by Chemical Formula 12.

[Chemical Formula 12] Liₐ₁₂Niₓ₁₂Co_{y12}M³_{1-x12-y12}O₂

In Chemical Formula 12, 0.9≤a12≤1.8, 0.6≤x12<1, 0<y12≤0.4, and M³ is selected from Al, B, Ce, Cr, F, Mg, Mn, Mo, Nb, P, S, Si, Sr, Ti, V, W, Zr, and combinations thereof.

In Chemical Formula 12, 0.9≤a12≤1.5, or 0.9≤a12≤1.2 or 0.95≤a12≤1.10, 0.7≤x12<1 and 0<y12≤0.3, or 0.8≤x12<1 and 0<y12≤0.2, or 0.9≤x12≤0.99 and 0.01≤y12≤0.1.

The lithium nickel-based composite oxide may be, for example, represented by Chemical Formula 13.

[Chemical Formula 13] Liₐ₁₃Niₓ₁₃Co_{y13}Al_{z13}M⁴_{1-x13-y13-z13}O₂

In Chemical Formula 13, 0.9≤a13≤1.8, 0.6≤x13<1, 0<y13<0.4, 0<z12<0.4, and M⁴ is selected from B, Ce, Co, Cr, F, Mg, Mn, Mo, Nb, P, S, Si, Sr, Ti, V, W, Zr, and a combination thereof.

In Chemical Formula 13, 0.9≤a13≤1.5, or 0.9≤a13≤1.2 or 0.95≤a13≤1.10, 0.7≤x13<1, 0<y13≤0.3 and 0<z13≤0.3, or 0.8≤x13<1, 0<y13≤0.2 and 0<z13≤0.2, or 0.9≤x13≤0.98, 0.01≤y13≤0.1, and 0.01≤z13≤0.1.

An average particle diameter (D50) of the positive active material may be 1 µm to 20 µm, for example, 1 µm to 15 µm, 1 µm to 10 µm, 1 µm to 8 µm, or 2 µm to 6 µm. If it is a single particle and has such a particle size range, excellent capacity characteristics and cycle-life characteristics may be realized.

The positive active material may have a full width at half maximum (FWHM) in the range of 0.1 to 0.2 in X-ray diffraction analysis (XRD). In addition, in an X-ray diffraction analysis of the positive active material, a ratio of the peak intensity at a (003) plane to a peak intensity of a (104) plane, that is, I(003)/I(104) may have a value of 1 to 1.5, for example, 1<I(003)/I(104)<1.5. When the positive active material has such a particle structure, it may exhibit excellent capacity characteristics and cycle-life characteristics.

In addition, the residual lithium of the positive active material may be is less than or equal to 3000 ppm, for example, is less than or equal to 2000 ppm. An excess of lithium may be used in preparing the high-nickel-based positive active material, and thus, excessive residual lithium may exist in the final positive active material, thereby reducing battery performance. On the other hand, in the positive active material according to the embodiment, residual lithium is less than or equal to 3000 ppm, and excellent battery performance may be maintained.

### Positive Electrode

A positive electrode for a rechargeable lithium battery may include a current collector and a positive active material layer on the current collector. The positive active material layer may include a positive active material, and may further include a binder and/or a conductive material.

The binder improves binding properties of positive active material particles with one another and with a current collector. Examples thereof may be polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto.

The content of the binder in the positive active material layer may be 1 wt% to 5 wt% based on the total weight of the positive active material layer.

The conductive material is included to provide electrode conductivity and any electrically conductive material may be used as a conductive material unless it causes a chemical change. Examples of the conductive material may include a carbon-based material such as natural graphite, artificial graphite, carbon black, acetylene black, ketjen black, a carbon fiber, carbon nanotube, and the like; a metal-based material of a metal powder or a metal fiber including copper, nickel, aluminum, silver, and the like; a conductive polymer such as a polyphenylene derivative; or a mixture thereof.

The content of the conductive material in the positive active material layer may be 1 wt% to 5 wt% based on the total weight of the positive active material layer.

An aluminum foil may be used as the current collector, but is not limited thereto.

### Negative Electrode

The negative electrode for a rechargeable lithium battery includes a current collector and a negative active material layer on the current collector. The negative active material layer may include a negative active material, and may further include a binder and/or a conductive material.

The negative active material may include a material that reversibly intercalates/deintercalates lithium ions, a lithium metal, a lithium metal alloy, a material capable of doping/dedoping lithium, or transition metal oxide.

The material that reversibly intercalates/deintercalates lithium ions may include, for example crystalline carbon, amorphous carbon, or a combination thereof as a carbon-based negative active material. The crystalline carbon may be non-shaped, or sheet, flake, spherical, or fiber shaped natural graphite or artificial graphite. The amorphous carbon may be a soft carbon, a hard carbon, a mesophase pitch carbonization product, calcined coke, and the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative active material or a Sn-based negative active material. The Si-based negative active material may include silicon, a silicon-carbon composite, SiOₓ (0 < x < 2), a Si-Q alloy (wherein Q is an alkali metal, an alkaline-earth metal, a Group 13 element, a Group 14 element, a Group 15 element, a Group 16 element, a transition metal, a rare earth element, and a combination thereof, but not Si) and the Sn-based negative active material may include Sn, SnO₂, Sn-R alloy (wherein R is an alkali metal, an alkaline-earth metal, a Group 13 element, a Group 14 element, a Group 15 element, a Group 16 element, a transition metal, a rare earth element, and a combination thereof, but not Sn). At least one of these materials may be mixed with SiO₂. The elements Q and R may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof.

The silicon-carbon composite may be, for example, a silicon-carbon composite including a core including crystalline carbon and silicon particles and an amorphous carbon coating layer disposed on the surface of the core. The crystalline carbon may be artificial graphite, natural graphite, or a combination thereof. The amorphous carbon precursor may be a coal-based pitch, mesophase pitch, petroleum-based pitch, coal-based oil, petroleum-based heavy oil, or a polymer resin such as a phenol resin, a furan resin, or a polyimide resin. In this case, the content of silicon may be 10 wt% to 50 wt% based on the total weight of the silicon-carbon composite. In addition, the content of the crystalline carbon may be 10 wt% to 70 wt% based on the total weight of the silicon-carbon composite, and the content of the amorphous carbon may be 20 wt% to 40 wt% based on the total weight of the silicon-carbon composite. In addition, a thickness of the amorphous carbon coating layer may be 5 nm to 100 nm. An average particle diameter (D50) of the silicon particles may be 10 nm to 20 µm. The average particle diameter (D50) of the silicon particles may be preferably 10 nm to 200 nm. The silicon particles may exist in an oxidized form, and in this case, an atomic content ratio of Si:O in the silicon particles indicating a degree of oxidation may be a weight ratio of 99:1 to 33:66. The silicon particles may be SiOₓ particles, and in this case, the range of x in SiOₓ may be greater than 0 and less than 2. In the present specification, unless otherwise defined, an average particle diameter (D50) indicates a particle where an accumulated volume is 50 volume% in a particle distribution.

The Si-based negative active material or Sn-based negative active material may be mixed with the carbon-based negative active material. When the Si-based negative active material or Sn-based negative active material and the carbon-based negative active material are mixed and used, the mixing ratio may be a weight ratio of 1:99 to 90:10.

In the negative active material layer, the negative active material may be included in an amount of 95 wt% to 99 wt% based on the total weight of the negative active material layer.

In an embodiment, the negative active material layer further includes a binder, and may optionally further include a conductive material. The content of the binder in the negative active material layer may be 1 wt% to 5 wt% based on the total weight of the negative active material layer. In addition, when the conductive material is further included, the negative active material layer may include 90 wt% to 98 wt% of the negative active material, 1 wt% to 5 wt% of the binder, and 1 wt% to 5 wt% of the conductive material.

The binder serves to well adhere the negative active material particles to each other and also to adhere the negative active material to the current collector. The binder may be a water-insoluble binder, a water-soluble binder, or a combination thereof.

Examples of the water-insoluble binder include polyvinyl chloride, carboxylated polyvinyl chloride, polyvinyl fluoride, an ethylene oxide-containing polymer, an ethylene propylene copolymer, polystyrene, polyvinylpyrrolidone, polyurethane, polytetrafluoro ethylene, polyvinylidene fluoride, polyethylene, polypropylene, polyamideimide, polyimide, or a combination thereof.

The water-soluble binder may include a rubber binder or a polymer resin binder. The rubber binder may be selected from a styrene-butadiene rubber, an acrylated styrene-butadiene rubber, an acrylonitrile-butadiene rubber, an acrylic rubber, a butyl rubber, a fluororubber, and a combination thereof. The polymer resin binder may be selected from polyethylene oxide, polyvinylpyrrolidone, polyepichlorohydrin, polyphosphazene, polyacrylonitrile, an ethylene propylene diene copolymer, polyvinylpyridine, chlorosulfonated polyethylene, latex, a polyester resin, an acrylic resin, a phenol resin, an epoxy resin, polyvinyl alcohol, and a combination thereof.

When a water-soluble binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. As the alkali metal, Na, K, or Li may be used. The amount of the thickener used may be 0.1 parts by weight to 3 parts by weight based on 100 parts by weight of the negative active material.

The conductive material is included to provide electrode conductivity and any electrically conductive material may be used as a conductive material unless it causes a chemical change. Examples of the conductive material include a carbon-based material such as natural graphite, artificial graphite, carbon black, acetylene black, ketjen black, a carbon fiber, carbon nanotube, and the like; a metal-based material of a metal powder or a metal fiber including copper, nickel, aluminum silver, and the like; a conductive polymer such as a polyphenylene derivative; or a mixture thereof.

The current collector may include one selected from a copper foil, a nickel foil, a stainless steel foil, a titanium foil, a nickel foam, a copper foam, a polymer substrate coated with a conductive metal, and a combination thereof.

### Rechargeable Lithium Battery

Another embodiment provides a rechargeable lithium battery including a positive electrode, a negative electrode, a separator between the positive electrode and the positive electrode, and an electrolyte. Herein, the aforementioned electrode may be the positive electrode and negative electrode.

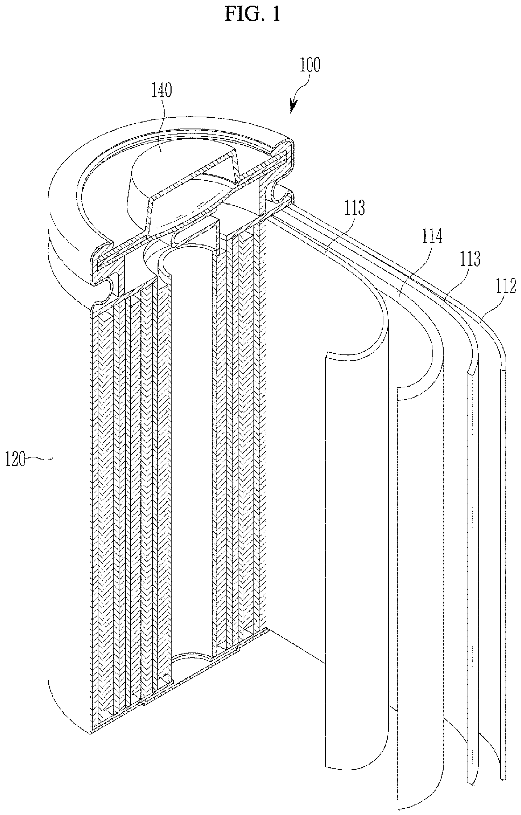

FIG. 1 is a schematic view illustrating a rechargeable lithium battery according to an embodiment. Referring to FIG. 1, a rechargeable lithium battery 100 according to an embodiment includes a battery cell including a positive electrode 114, a negative electrode 112 facing the positive electrode 114, a separator 113 between the positive electrode 114 and the negative electrode 112, and an electrolyte for a rechargeable lithium battery impregnating the positive electrode 114, the negative electrode 112, and the separator 113, a battery case 120 housing the battery cell, and a sealing member 140 sealing the battery case 120.

The electrolyte includes a non-aqueous organic solvent and a lithium salt.

The non-aqueous organic solvent serves as a medium for transmitting ions taking part in the electrochemical reaction of a battery. The non-aqueous organic solvent may be a carbonate-based, ester-based, ether-based, ketone-based, or alcohol-based solvent, or aprotic solvent. Examples of the carbonate-based solvent include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. Examples of the ester-based solvent include methyl acetate, ethyl acetate, n-propyl acetate, dimethyl acetate, methyl propionate, ethyl propionate, γ-butyrolactone, decanolide, valerolactone, mevalonolactone, caprolactone, and the like. The ether-based solvent may be dibutyl ether, tetraglyme, diglyme, dimethoxyethane, 2-methyltetrahydrofuran, tetrahydrofuran, and the like and the ketone-based solvent may be cyclohexanone, and the like. In addition, the alcohol-based solvent may be ethyl alcohol, isopropyl alcohol, etc. and the aprotic solvent may be nitriles such as R-CN (where R is a C2 to C20 linear, branched, or cyclic hydrocarbon group and may include a double bond, an aromatic ring, or an ether bond), amides such as dimethylformamide, dioxolanes such as 1,3-dioxolane, sulfolanes, and the like.

The non-aqueous organic solvent may be used alone or in a mixture. When the organic solvent is used in a mixture, the mixture ratio may be controlled in accordance with a desirable battery performance.

In addition, in the case of the carbonate-based solvent, a mixture of a cyclic carbonate and a chain-type carbonate may be used. In this case, when the cyclic carbonate and the chain-type carbonate are mixed in a volume ratio of about 1:1 to about 1:9, the electrolyte may exhibit excellent performance.

The non-aqueous organic solvent may further include an aromatic hydrocarbon-based organic solvent in addition to the carbonate-based solvent. In this case, the carbonate-based solvent and the aromatic hydrocarbon-based organic solvent may be mixed in a volume ratio of about 1:1 to about 30:1.

As the aromatic hydrocarbon-based solvent, an aromatic hydrocarbon-based compound represented by Chemical Formula I may be used.

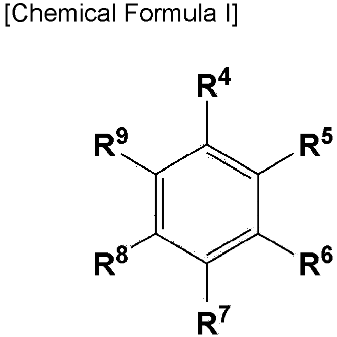

In Chemical Formula I, R⁴ to R⁹ are the same or different and are selected from hydrogen, a halogen, a C1 to C10 alkyl group, a haloalkyl group, and a combination thereof.

Specific examples of the aromatic hydrocarbon-based solvent may be selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and a combination thereof.

The electrolyte may further include vinylene carbonate or an ethylene carbonate-based compound of Chemical Formula II in order to improve cycle-life of a battery.

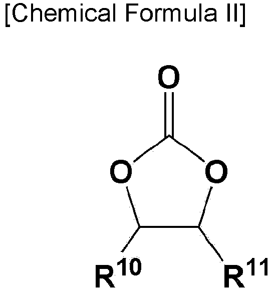

In Chemical Formula II, R¹⁰ and R¹¹ are the same or different, and are selected from hydrogen, a halogen, a cyano group, a nitro group, and fluorinated C1 to C5 alkyl group, provided that at least one of R¹⁰ and R¹¹ is selected from a halogen, a cyano group, a nitro group, and fluorinated C1 to C5 alkyl group, but both of R¹⁰ and R¹¹ are not hydrogen.

Examples of the ethylene-based carbonate-based compound may be difluoro ethylenecarbonate, chloroethylene carbonate, dichloroethylene carbonate, bromoethylene carbonate, dibromoethylene carbonate, nitroethylene carbonate, cyanoethylene carbonate, or fluoroethylene carbonate. The amount of the additive for improving cycle-life may be used within an appropriate range.

The lithium salt dissolved in the non-aqueous organic solvent supplies lithium ions in a battery, enables a basic operation of a rechargeable lithium battery, and improves transportation of the lithium ions between positive and negative electrodes.

Examples of the lithium salt include at least one supporting salt selected from LiPF₆, LiBF₄, LiSbF₆, LiAsF₆, LiN(SO₂C₂F₅)₂, Li(CF₃SO₂)₂N, LiN(SO₃C₂F₅)₂, Li(FSO₂)₂N (lithium bis(fluorosulfonyl)imide: LiFSI), LiC₄F₉SO₃, LiClO₄, LiAlO₂, LiAlCl₄, LiPO₂F₂, LiN(CₓF₂ₓ₊₁SO₂)(C_{y}F_{2y+1}SO₂), wherein x and y are natural numbers, for example, an integer ranging from 1 to 20, lithium difluoro(bisoxolato) phosphate, LiCl, Lil, LiB(C₂O₄)₂ (lithium bis(oxalato) borate, LiBOB), and lithium difluoro(oxalato)borate (LiDFOB).

The lithium salt may be used in a concentration ranging from 0.1 M to 2.0 M. When the lithium salt is included at the above concentration range, an electrolyte may have excellent performance and lithium ion mobility due to optimal electrolyte conductivity and viscosity.

The separator 113 separates a positive electrode 114 and a negative electrode 112 and provides a transporting passage for lithium ions and may be any generally-used separator in a lithium ion battery. In other words, it may have low resistance to ion transport and excellent impregnation for an electrolyte. For example, the separator may be selected from a glass fiber, polyester, Teflon, polyethylene, polypropylene, polytetrafluoroethylene, or a combination thereof. It may have a form of a non-woven fabric or a woven fabric. For example, in a lithium ion battery, a polyolefin-based polymer separator such as polyethylene and polypropylene is mainly used. In order to ensure the heat resistance or mechanical strength, a coated separator including a ceramic component or a polymer material may be used. Optionally, it may have a mono-layered or multilayered structure.

Rechargeable lithium batteries may be classified as lithium ion batteries, lithium ion polymer batteries, and lithium polymer batteries according to the presence of a separator and the kind of electrolyte used therein. The rechargeable lithium batteries may have a variety of shapes and sizes, and include cylindrical, prismatic, coin, or pouch-type batteries, and may be thin film batteries or may be rather bulky in size. Structures and manufacturing methods for lithium ion batteries pertaining to this disclosure are well known in the art. The rechargeable lithium battery according to an embodiment may be used in an electric vehicle (EV), a hybrid electric vehicle such as a plug-in hybrid electric vehicle (PHEV), and the like because it implements a high capacity and has excellent storage stability, cycle-life characteristics, and high rate characteristics at high temperatures.

Hereinafter, examples of the present invention and comparative examples are described. It is to be understood, however, that the examples are for the purpose of illustration and are not to be construed as limiting the present invention.

### Example 1

### Preparation of Positive Active Material

A precursor with an average particle diameter (D50) of 3.5 µm, Ni_{0.946}Co_{0.039}Al_{0.015}(OH)₂, is subjected to oxidative heat treatment at 500 °C for 0.5 hours. To this material subjected to oxidative heat treatment, 112 mol% of lithium hydroxide (hydrous LiOH) based on the total amount of Ni and Co, 1.0 mol% of Li₂SO₄ as a flux agent, 0.5 mol% of hydrophobic silica (hydrophobic SiO₂), and 0.5 mol% of Li₃PO₄ are respectively added and then, mixed with a mixer. The mixed material is primarily fired at 800 °C under an O₂ atmosphere for 15 hours. Subsequently, the obtained active material is pulverized with a Jet mill under a pressure of 3 bars.

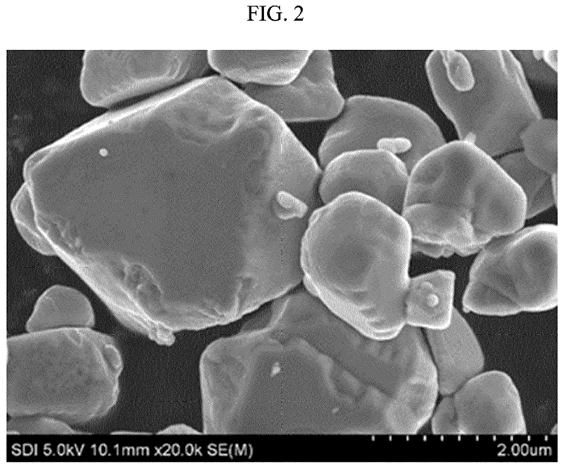

The pulverized active material is coated with cobalt and then, washed with water to remove residual lithium. The powdered active material is added to distilled water and washed therewith, while mixing, and then, 3 mol% of cobalt nitrate hexahydrate (Co(NO₃)₂6H₂O) based on the total amount of Ni and Co of the active material is added thereto at a predetermined rate, and ammonium hydroxide (NH₄OH) and sodium hydroxide (NaOH) as a pH controlling agent are slowly added thereto to perform cobalt coating. Subsequently, the obtained product is dried at 150 °C for 12 hours, sieved with a 45 µm sieve, and then, secondarily fired at 700 °C under an O₂ atmosphere for 15 hours. After the secondary firing, the active material is sieved with a 45 µm sieve. A final active material therefrom is taken an image of with a scanning electron microscope, and the image is shown in FIG. 2.

### Manufacture of Positive Electrode

97.7 wt% of the obtained positive active material, 1.3 wt% of a polyvinylidene fluoride binder, and 1wt% of a carbon nanotube (CNT) conductive material are mixed in an N-methylpyrrolidone solvent, preparing positive active material slurry. The positive active material slurry is coated on an aluminum current collector, dried, and compressed, manufacturing a positive electrode.

### Manufacturing of Rechargeable Lithium Battery Cell

The prepared positive electrode and a lithium metal counter electrode are used, a separator with a polyethylene polypropylene multi-layer structure is interposed therebetween, and an electrolyte solution prepared by adding 1.15 M of LiPF₆ lithium salt to a solvent of ethylene carbonate (EC), ethylmethyl carbonate (EMC), and dimethylcarbonate (DMC) mixed in a volume ratio of 20:40:40 is injected thereinto, manufacturing a coin half-cell.

### Example 2

A positive active material, a positive electrode, and a battery cell are manufactured in the same manner as in Example 1 except that the positive active material is prepared by not adding 0.5 mol% of Li₃PO₄.

### Example 3

A positive active material, a positive electrode, and a battery cell are manufactured in the same manner as in Example 1 except that the positive active material is prepared by using Na₂SO₄ instead of Li₂SO₄ as a flux agent.

### Example 4

A positive active material, a positive electrode, and a battery cell are manufactured in the same manner as in Example 1 except that the positive active material is prepared by using hydrophilic silica (hydrophilic SiO₂) instead of the hydrophobic silica.

### Example 5

A positive active material, a positive electrode, and a battery cell are manufactured in the same manner as in Example 2 except that the positive active material is prepared by using hydrophilic silica instead of the hydrophobic silica.

### Example 6

A positive active material, a positive electrode, and a battery cell are manufactured in the same manner as in Example 1 except that the positive active material is prepared by performing the primary firing at 825 °C for 25 hours.

### Example 7

A positive active material, a positive electrode, and a battery cell are manufactured in the same manner as in Example 1 except that the positive active material is prepared by performing the primary firing at 850 °C for 25 hours.

### Comparative Example 1

A positive active material, a positive electrode, and a battery cell are manufactured in the same manner as in Example 1 except that the positive active material is prepared by adding 112 mol% of lithium hydroxide without using the flux agent, hydrophobic silica, and Li₃PO₄ and then, performing the primary firing alone.

### Comparative Example 2

A positive active material, a positive electrode, and a battery cell are manufactured in the same manner as in Example 1 except that the positive active material is prepared by adding 112 mol% of hydrous lithium hydroxide and 1 mol% of Li₂SO₄ as a flux agent without using hydrophobic silica and Li₃PO₄ and then, performing the primary firing.

### Comparative Example 3

A positive active material, a positive electrode, and a battery cell are manufactured in the same manner as in Example 1 except that the positive active material is prepared by adding 112 mol% of hydrous lithium hydroxide and 0.5 mol% of hydrophilic silica alone without using a flux agent and Li₃PO₄ and then, performing the primary firing.

### Evaluation Example 1: Element Analysis (STEM-EDS)

The positive active materials according to Examples 1 and 2 are photographed with a scanning transmissive electron microscope (STEM) to analyze elements on the surface through energy dispersive X-ray spectroscopy (EDS). The result of Example 1 is shown in FIG. 3, and the result of Example 2 is shown in FIG. 4.

Referring to FIG. 3, cobalt is confirmed to be coated on the surface of single particles, silicon is observed on the surface and near-surface of the single particles, and sulfur is confirmed to be distributed on the whole surface of the single particles.

Referring to FIG. 4, a silicon component is observed not only on the surface and near-surface of single-crystal particles but also in a crack portion of the single-crystal particles.

### Evaluation Example 2: Evaluation of Interfacial Resistance

The rechargeable lithium battery cells according to Examples 1, 2, and 3 and Comparative Example 2 are measured with respect to a degree of resistance formed on the electrode interface by using Electrochemical Impedance Spectroscopy (EIS). Herein, an amplitude is ±10 mV, and a frequency is in a range of 10 mHz to 1 MHz. The resistance is measured at a constant current rate of 0.1 C by charging the cells to a maximum voltage of 4.25 V based on the Li negative electrode and then, cut off at a 0.05 C rate, while maintaining the constant voltage of 4.25 V, and paused for 1 hour. Subsequently, the resistance is measured in an equilibrium voltage state according to a 2-probe method by using an impedance analysis.

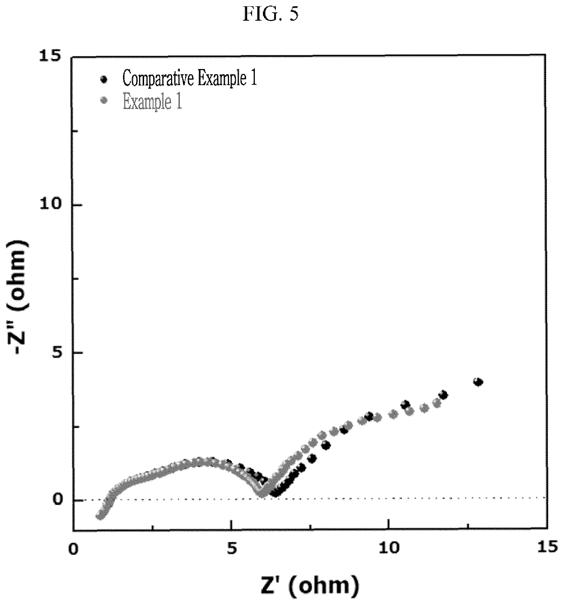

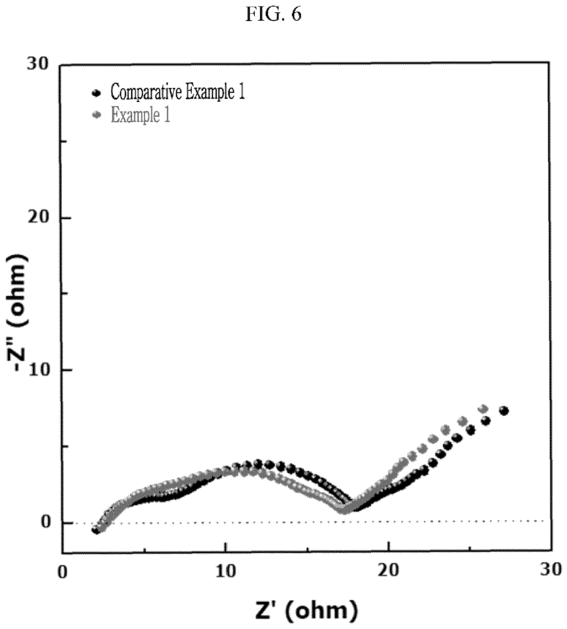

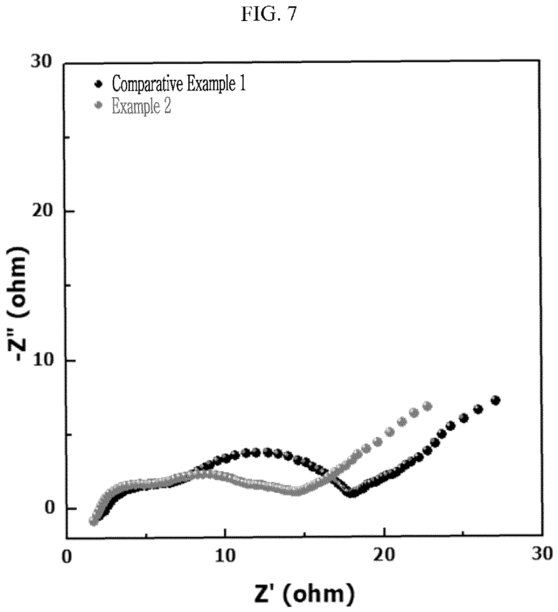

FIG. 5 is a Nyguist plot measured during the initial charging of Example 1 and Comparative Example 1, and FIG. 6 is a Nyguist plot measured after 25 cycles of Example 1 and Comparative Example 1, and FIG. 7 is a Nyguist plot measured after 25 cycles of Example 2 and Comparative Example 1. Referring to FIGS. 5 to 7, Examples 1 and 2 exhibit lower interfacial resistance than Comparative Example 1.

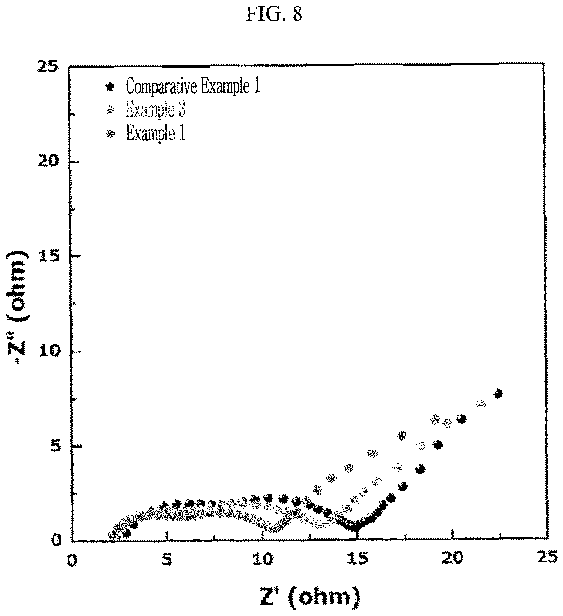

FIG. 8 is a Nyguist plot after 25 cycles in Example 1 and Comparative Example 1 and Example 3 using sodium sulfate as a flux agent. Referring to FIG. 8, Examples 1 and 3 all exhibit lower interfacial resistance than Comparative Example 1.

Low interfacial resistance (R_{ct}, charge-transfer resistance) facilitates an insertion/desorption reaction of lithium ions during the charging and discharging and constantly maintains charge and discharge efficiency (coulombic efficiency), greatly improving cycle-life characteristics of a battery.

### Evaluation Example 3: Evaluation of Lithium Ion Diffusivity

The cells according to Examples 1 and 2 and Comparative Examples 1 and 2 are charged to an upper limit voltage of 4.25 V in a constant current/constant voltage pattern of 0.1 C, cut off at a current of 0.05 C under a constant voltage, paused for 10 minutes, and discharged to a cut-off voltage of 3.0 V at a constant current of 0.1 C at room temperature (25 °C) and then, measured with respect to initial charge and discharge capacity

Subsequently, the cells are charged at a constant current of 0.1 C for 20 minutes and paused for 1 hour for stabilization to an equilibrium voltage state and then, charged again for 20 minutes to an upper limit voltage of 4.3 V and discharged again to a cut-off voltage of 3.0 V at a constant current of 0.1 C for 20 minutes at 25 °C in the same pattern as above, which is a galvanostatic intermittent titration technique (GITT) method, to evaluate lithium ion (Li⁺) diffusivity of a single-particle positive active material.

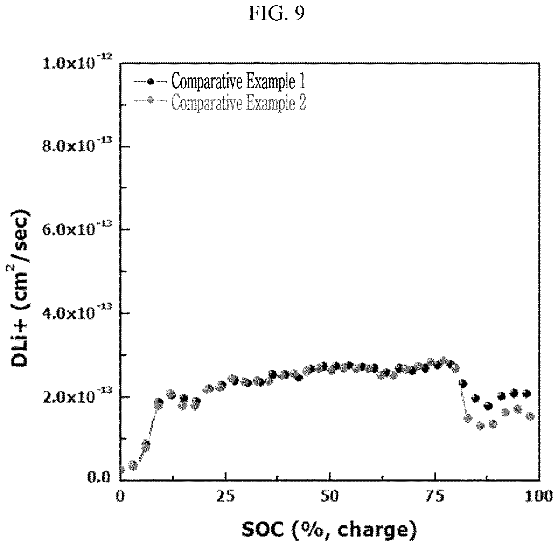

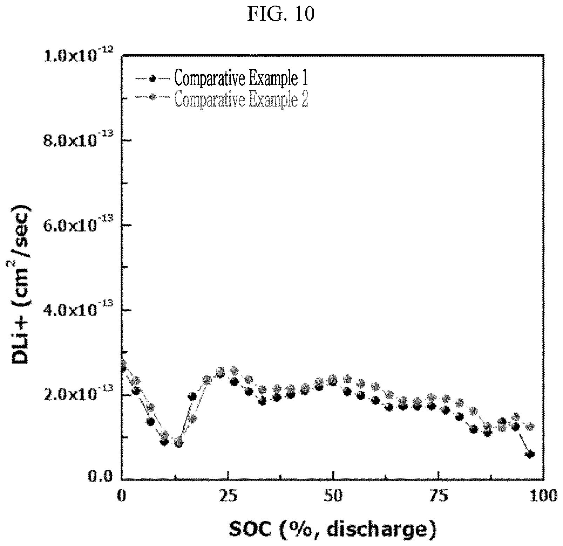

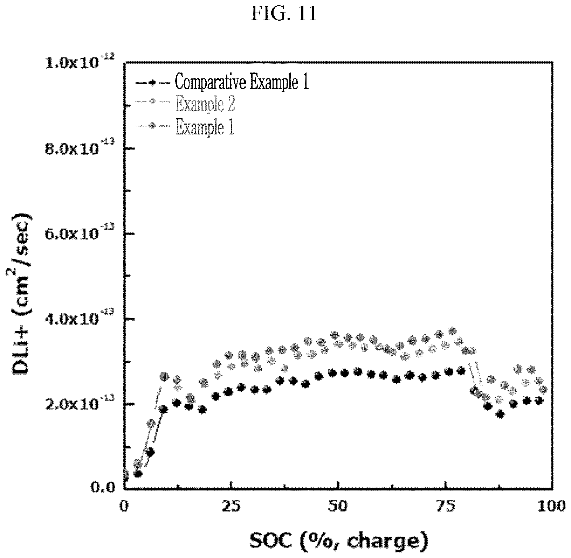

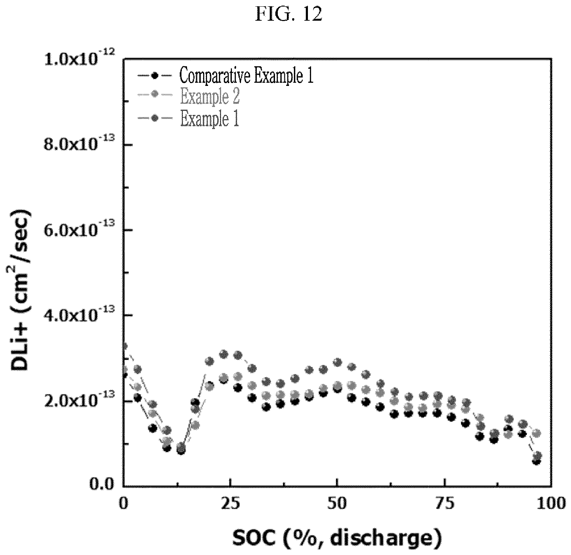

FIG. 9 is a graph of lithium ion diffusivity measured at 25 °C during the initial charge of the cells of Comparative Examples 1 and 2, and FIG. 10 is a graph of lithium ion diffusivity measured at 25 °C during the initial discharge of the cells of Comparative Examples 1 and 2. FIG. 11 is a graph of lithium ion diffusivity measured at 25 °C during the initial charge of the cells of Comparative Example 1 and Examples 1 and 2, and FIG. 12 is a graph of lithium ion diffusivity measured at 25 °C during the initial discharge of the cells of Comparative Example 1 and Examples 1 and 2.

Referring to FIGS. 9 to 12, Examples 1 and 2 exhibit improved lithium ion diffusivity, compared with Comparative Examples 1 and 2, and Examples 1 and 2 exhibit greater than or equal to about 1.5 times higher lithium ion diffusivity than Comparative Example 1. This high lithium ion diffusivity is an indicator of structural stability of an active material.

### Evaluation Example 4: Evaluation DC-IR

The cells of Example 1 and Comparative Examples 1 and 2 are charged to an upper limit voltage of 4.25 V in a constant current/constant voltage pattern of 0.1 C, cut off at a current of 0.05 C in a constant voltage state, paused for 10 minutes, and discharged to a cut-off voltage of 3.0 V at a constant current of 0.1 C at room temperature (25 °C) for initial charge and discharge. After the room-temperature evaluation, the cells are 50 times charged and discharged at 1 C, wherein a high temperature (45 °C) evaluation is conducted in the same manner as above except that the charge is performed to an upper limit voltage of 4.30 V for accelerated evaluation.

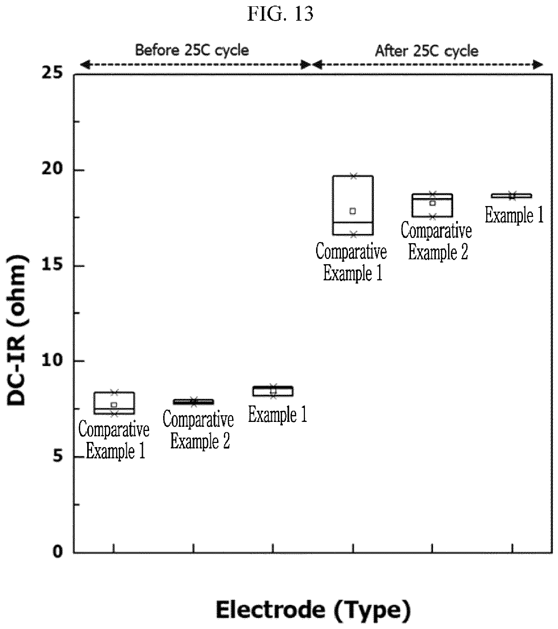

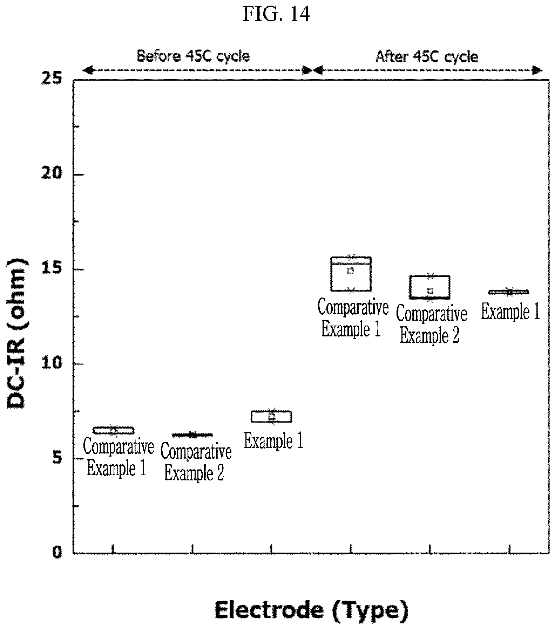

The cells of Example 1 and Comparative Examples 1 and 2 are measured with respect to resistance (DC-IR) before/after the 50 cycles at room temperature and a high temperature. FIG. 13 is a DC-IR graph before/after the 50 cycles at 25 °C, and FIG. 14 is a DC-IR graph before/after the 50 cycles at 45 °C. Referring to FIG. 13, in the graph showing after the cycles, Comparative Examples 1 and 2 exhibit a severe cell deviation, compared with Example 1. Referring to FIG. 14, in the graph showing after the cycles, Comparative Examples 1 and 2 exhibit a severe cell deviation, compared with Example 1, and the cell of Example 1 exhibit the lowest DC resistance at the high temperature.

The single particle active materials according to the examples exhibit that a silicon-based protective layer is stably formed by surface chemisorption of a lithium sulfate flux agent, and this structure controls irreversible characteristics of an electrode-electrolyte surface (cathode electrolyte layer CEI) caused by charges and discharges of battery cells and reduces DC resistance, thereby improving high-temperature cycle-life characteristics, which are output characteristics of the batter cells.

### Evaluation Example 5: Evaluation of Battery Cycle-life Characteristics

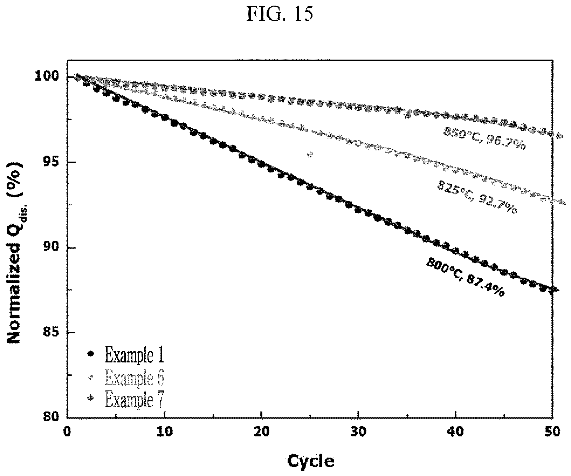

The cells of Examples 1, 6, and 7 and Comparative Example 1 are charged to an upper limit voltage of 4.25 V in a constant current/constant voltage pattern of 0.1 C, cut off at 0.05 C in a constant voltage state, paused for 10 minutes, and discharged at 0.1 C to a cut-off voltage of 3.0 V at 25 °C for initial charge and discharge and then, measured with respect to initial discharge capacity and subsequently, 50 times charged and discharged at 1 C and then, measured with respect to discharge capacity at the 50^{th} cycle, which are used to calculate a ratio (%) of the discharge capacity at the 50^{th} cycle to the initial discharge capacity as capacity retention, that is, as cycle-life characteristics. The 50^{th} capacity retentions of Example 1 and Comparative Example 2 are shown in Table 1, and the cycle-life characteristics of Examples 1, 6, and 7 are shown in FIG. 15.

**(Table 1)**

| | 50th capacity retention (%) |
|---|---|
| Comparative Example 1 | 81.5 |
| Example 1 | 87.4 |

Referring to Table 1 and FIG. 15, Examples 1, 6, and 7 exhibit significantly improved cycle-life characteristics, compared with Comparative Example 1, wherein Example 6 exhibit capacity retention of 92.7%, and Example 7 exhibit significantly improved capacity retention of 96.7%.

### Evaluation Example 6: XPS Evaluation

The positive active materials of Examples 1 and 2 and Comparative Examples 1 and 2 are analyzed through X-ray photoelectron spectroscopy (XPS).

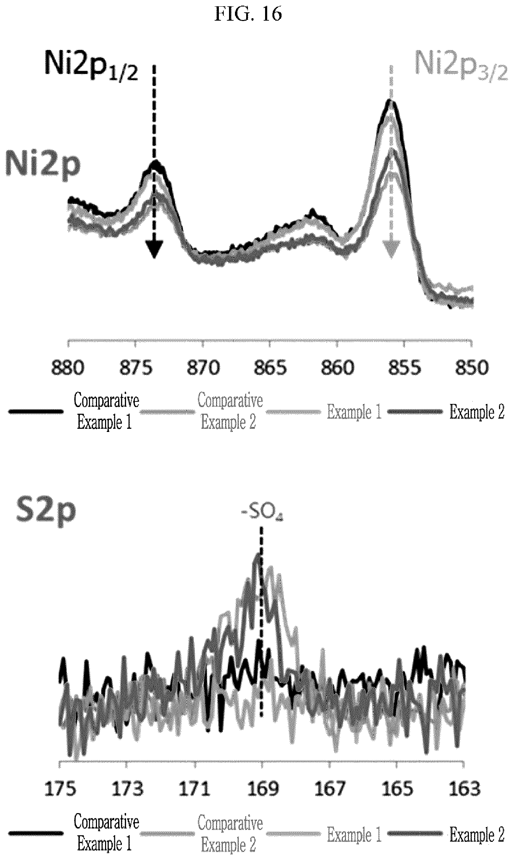

FIG. 16 is a graph showing an Ni2p peak and an S2p peak on each positive active material surface of Examples 1 and 2 and Comparative Examples 1 and 2. Referring to FIG. 16, regarding the Ni2p peak, referring to an Ni2p_{1/2} peak marked by purple and an Ni2p_{3/2} peak marked by red, Example 1 and 2 exhibit reduced peaks, compared with Comparative Examples 1 and 2. The reduction of the Ni2p peak proves that a protective layer mainly composed of Li-Si is formed on the surface, and accordingly, Examples 1 and 2 using a flux agent with silica exhibit a synergy effect, compared with Comparative Example 2 using the flux agent alone. In addition, regarding the S2p peak, the S2p peak is formed only in Examples 1 and 2. The formation of the S2p peak proves that a Li-Si-based protective layer using a lithium sulfate flux agent as a seed is well formed.

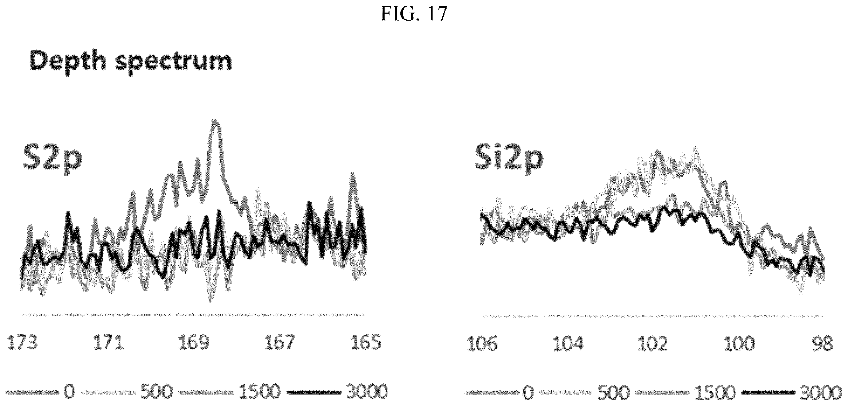

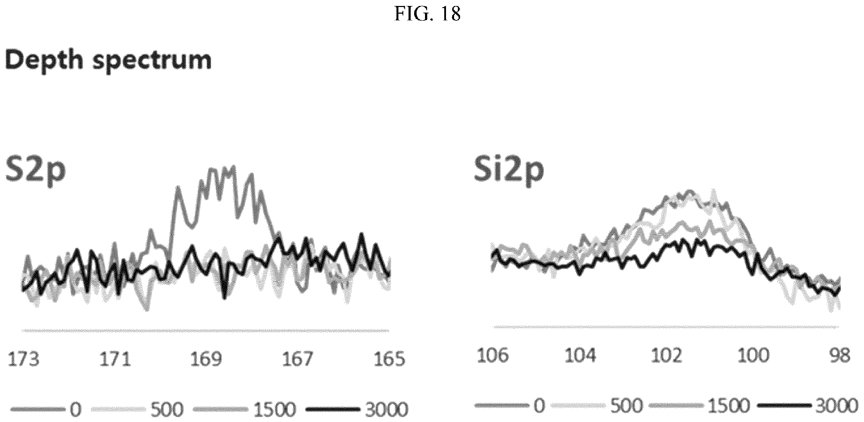

FIGS. 17 and 18 are each XPS analysis graph showing each profile of the positive active materials of Examples 1 and 2 according to a depth. Referring to FIGS. 17 and 18, the S2p peak is formed in a light blue graph, that is, only on the surface (0 sec etching), which shows that the sulfate-based flux agent seed exists only on the surface. In addition, the Si2p peak is formed in the light blue graph and an orange graph, that is, to a depth below the surface after 500 sec etching, which shows that silicon-based components are distributed not only on the surface of the single-particle positive active material but also near to the surface (near-surface).

For reference, in FIGS. 16 to 18, a unit of a horizontal axis is eV, and in FIGS. 17 and 18, light blue indicates an XPS graph after 0 sec etching, orange indicates an XPS graph after 500 sec etching, yellow indicates an XPS graph after 1500 sec etching, and light green indicates an XPS graph after 3000 sec etching.

### Evaluation Example 7: Lithium Ion diffusivity and Initial Discharge Capacity

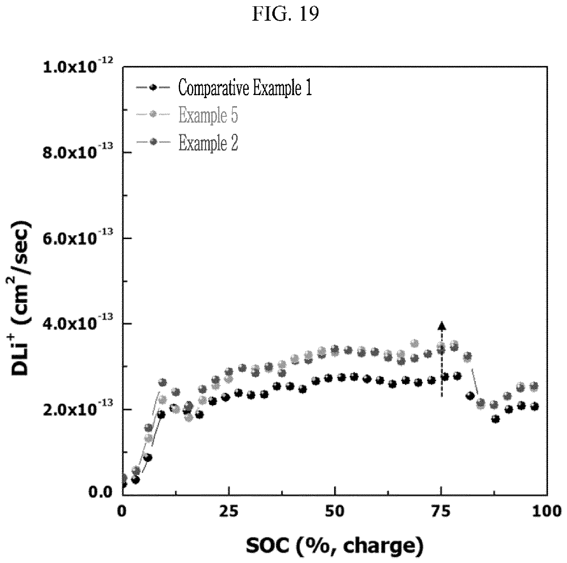

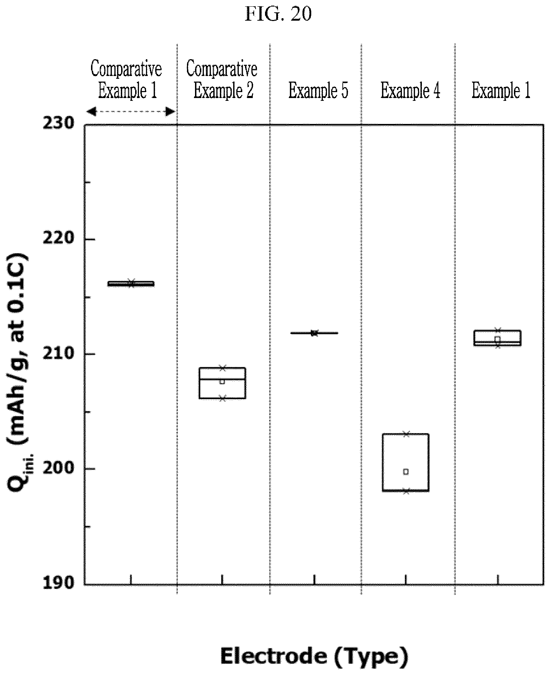

Examples 4 and 5 using hydrophilic silica are evaluated with respect to lithium ion diffusivity and initial discharge capacity in the same manner as in Evaluation Example 3. FIG. 19 is a graph showing lithium ion diffusivity during the initial charging of Comparative Example 1 and Examples 2 and 5, and FIG. 20 is a graph showing initial discharge capacity of Comparative Examples 1 and 2 and Examples 1, 4, and 5. Referring to FIG. 19, Example 5 is understood to secure structural stability due to improved lithium ion diffusivity like Example 2. However, referring to FIG. 20, Example 1 using hydrophobic silica exhibits much improved initial discharge capacity, compared with Example 4 using hydrophilic silica.

### Evaluation Example 8: SEM Image Analysis

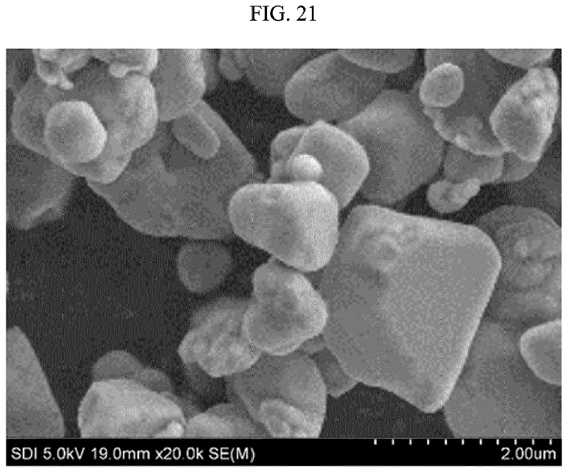

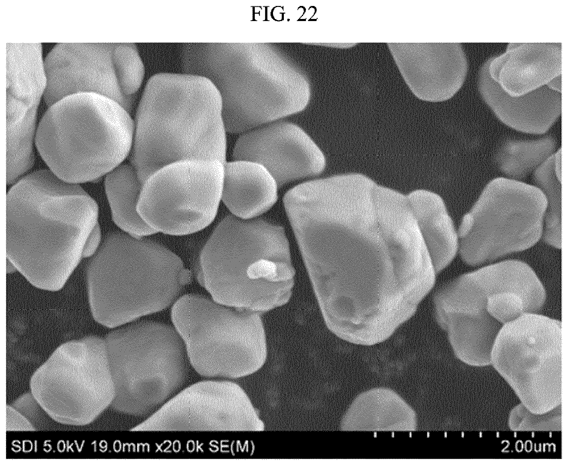

On the other hand, FIGS. 21 and 22 show each scanning electron microscope image of the positive active materials of Comparative Examples 1 and 2. Compared with FIG. 2 showing a scanning electron microscope image of the positive active material of Example 1, Example 1 exhibits further grown single crystal particles, compared with Comparative Examples 1 and 2.

### Evaluation Example 9: Evaluation of Self-discharge related to Comparative Example 3

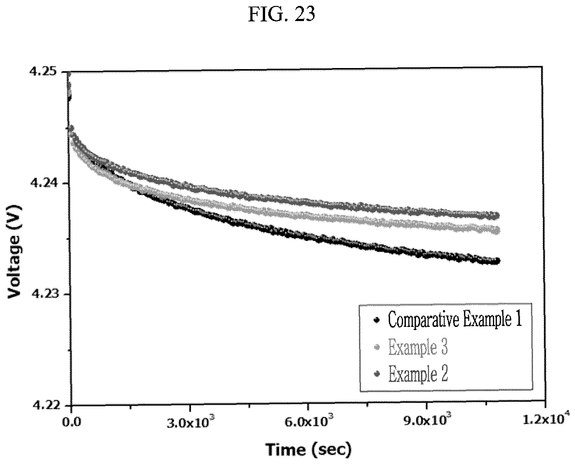

The cells of Example 2 and Comparative Examples 1 and 3 are charged to an upper limit voltage of 4.25 V in a constant current/constant voltage pattern of 0.1 C and cut off at 0.05 C in a constant voltage stage at 25 °C and then, monitored with respect to open-circuit voltage (OCV) behaviors to analyze self-discharge behaviors, and the results are shown in FIG. 23. Referring to FIG. 23, Example 2 exhibits much more excellent self-discharge characteristics, compared with Comparative Example 3 using silica alone without the flux agent as well as Comparative Example 1. The reason is that the sulfate-based flux agent with silica is simultaneously used to stabilize the surface of single particles and control a side reaction with an electrolyte and thereby, improve self-discharge characteristics.

While this invention has been described in connection with what is presently considered to be practical example embodiments, it is to be understood that the invention is not limited to the disclosed embodiments. On the contrary, it is intended to cover various modifications and equivalent arrangements included within the spirit and scope of the appended claims.

**[Description of Symbols]**

| | | | |
|---|---|---|---|
| 100: | rechargeable lithium battery | 112: | negative electrode |
| 113: | separator | 114: | positive electrode |
| 120: | battery case | 140: | sealing member |

## Claims

1. A positive active material for a rechargeable lithium battery, comprising
a single particle including a lithium nickel-based composite oxide, and
a coating portion disposed on a surface of the single particle and containing S and Si.

2. The positive active material for the rechargeable lithium battery of claim 1, wherein
the coating portion includes a sulfur-containing compound represented by Chemical Formula 1 and a silicon-containing compound represented by Chemical Formula 2:
[Chemical Formula 1] Aₐ₁SO_{z1}
wherein, in Chemical Formula 1, A is an alkali metal, 0≤a1≤2, and 0≤z1≤4, and
[Chemical Formula 2] Aₐ₂Siₓ₂O_{z2}
wherein, in Chemical Formula 2, A is an alkali metal, 0≤a2≤5, 1≤x2≤2, and 0≤z2≤4.

3. The positive active material for the rechargeable lithium battery of claim 2, wherein
the silicon-containing compound represented by Chemical Formula 2 is distributed on the surface of the single particle, and
it exists in the form of an island having a thickness of 1 nm to 50 nm, and/or is present in a crack portion inside the single particle.

4. The positive active material for the rechargeable lithium battery of claim 1, wherein
the coating portion includes a sulfur-silicon-containing compound represented by Chemical Formula 3:
[Chemical Formula 3] Aₐ₃Siₓ₃S_{y3}O_{z3}
wherein, in Chemical Formula 3, A is an alkali metal, 0≤a3≤5, 0<x3≤2, 0<y3≤5, and 0≤z3≤10.

5. The positive active material for the rechargeable lithium battery of claim 1, wherein
the coating portion includes at least one of a sulfur-containing compound represented by Chemical Formula 1-1 and a silicon-containing compound represented by Chemical Formula 2-1:
[Chemical Formula 1-1] Aₐ₁SO_{z1}-(CH₂)ₙ₁CH₃
wherein, in Chemical Formula 1-1, A is an alkali metal, 0≤a1≤2, 0≤z1≤4, and 0≤n1≤5,
[Chemical Formula 2-1] Aₐ₂Siₓ₂O_{z2}-(CH₂)ₙ₂CH₃
wherein, in Chemical Formula 2-1, A is an alkali metal, 0≤a2≤2, 1≤x2≤2, 0≤z2≤4, and 0≤n2≤5.

6. The positive active material for the rechargeable lithium battery of claim 1, wherein
the coating portion includes a sulfur-silicon-containing compound represented by Chemical Formula 3-1:
[Chemical Formula 3-1] Aₐ₃Siₓ₃S_{y3}O_{z3}-(CH₂)ₙ₃CH₃
wherein, in Chemical Formula 3-1, A is an alkali metal, 0≤a3≤5, 0<x3≤2, 0<y3≤5, 0≤z3≤10, and 0≤n3≤5.

7. The positive active material for the rechargeable lithium battery of claim 1, wherein
the coating portion further includes at least one element selected from P, Co, and Zr.

8. The positive active material for the rechargeable lithium battery of claim 1, wherein
the coating portion further includes a phosphorus-containing compound represented by Chemical Formula 4:
[Chemical Formula 4] Aₐ₄PO_{z4}
wherein, in Chemical Formula 4, A is an alkali metal, 0≤a4≤3, and 0≤z4≤4.

9. The positive active material for the rechargeable lithium battery of claim 1, wherein
the lithium nickel-based composite oxide is represented by Chemical Formula 11:
[Chemical Formula 11] Liₐ₁₁Niₓ₁₁M¹_{y11}M²_{1-x11-y11}O₂
wherein, in Chemical Formula 11, 0.9≤a11≤1.8, 0.6≤x11≤1, 0≤y11≤0.4, and M¹ and M² are each independently selected from Al, B, Ce, Co, Cr, F, Mg, Mn, Mo, Nb, P, S, Si, Sr, Ti, V, W, Zr, and a combination thereof.

10. A method of preparing a positive active material for a rechargeable lithium battery, comprising
mixing a precursor including a nickel-based transition metal hydroxide, a nickel-based transition metal oxide, or a combination thereof; a lithium raw material; a flux agent including an alkali metal sulfate; and silica and performing first heat treatment, and
obtaining a positive active material including a single particle including a lithium nickel-based composite oxide and a coating portion disposed on the surface and containing S and Si.

11. The method of preparing the positive active material for the rechargeable lithium battery of claim 10, wherein
100 parts by mole to 130 parts by mole of lithium raw material, 0.1 parts by mole to 10 parts by mole of the flux agent, and 0.05 parts by mole to 5 parts by mole of the silica based on 100 moles of the transition metal including nickel of the precursor are mixed.

12. The method of preparing the positive active material for the rechargeable lithium battery of claim 10, wherein
the first heat treatment is performed at 750 °C to 900 °C.

13. The method of preparing the positive active material for the rechargeable lithium battery of claim 10, wherein
the silica is hydrophobic silica.

14. The method of preparing the positive active material for the rechargeable lithium battery of claim 10, wherein
the first heat treatment is performed by further mixing the alkali metal phosphate.

15. The method of preparing the positive active material for the rechargeable lithium battery of claim 10, wherein
the method of preparing the positive active material further includes
washing the obtained product and performing a second heat treatment after the first heat treatment.

16. The method of preparing the positive active material for the rechargeable lithium battery of claim 15, wherein
the second heat treatment is performed at 600 °C to 780 °C.

17. The method of preparing the positive active material for the rechargeable lithium battery of claim 10, wherein
the method of preparing the positive active material further includes
performing cobalt coating and/or zirconium coating, and
performing second heat treatment.

18. The method of preparing the positive active material for the rechargeable lithium battery of claim 10, wherein
in the precursor, the nickel-based transition metal oxide is represented by Chemical Formula 21 and the nickel-based transition metal hydroxide is represented by Chemical Formula 31:
[Chemical Formula 21] Niₓ₂₁M²¹_{y21}M²²_{1-x21-y21}O₂
wherein, in Chemical Formula 21, 0.6≤x21≤1, 0≤y21≤0.4, and M²¹ and M²² are each independently selected from Al, B, Ce, Co, Cr, F, Mg, Mn, Mo, Nb, P, S, Si, Sr, Ti, V, W, Zr, and a combination thereof, and
[Chemical Formula 31] Niₓ₃₁M³¹_{y31}M³²_{1-x31-y31}(OH)₂
wherein, in Chemical Formula 31, 0.6≤x31≤1, 0≤y31≤0.4, and M³¹ and M³² are each independently selected from Al, B, Ce, Co, Cr, F, Mg, Mn, Mo, Nb, P, S, Si, Sr, Ti, V, W, Zr, and a combination thereof.

19. A rechargeable lithium battery, comprising
a positive electrode including the positive active material of claim 1,
a negative electrode, and
an electrolyte.

20. A rechargeable lithium battery, comprising
a positive electrode including a positive active material prepared according to the method of claim 10,
a negative electrode, and
an electrolyte.
